# EUROPEAN PATENT APPLICATION

(11) **EP 4 631 985 A1**
(43) Date of publication of application: **15.10.2025**
(21) Application number: 24169603.8
(22) Date of filing: 11.04.2024
(51) Int. Cl.: C08G 18/00, C08G 18/08, C08G 18/28, C08G 18/36, C08G 18/48, C08G 18/66, C08G 18/76, C08J 9/32, C09J 175/08

(54) **A THERMALLY DEBONDABLE TWO-COMPONENT POLYURETHANE ADHESIVE COMPOSITION**

(71) Applicant: Henkel AG & Co. KGaA, 40589 Düsseldorf (DE)
(72) Inventor: Migliore, Nicola, 40227 Düsseldorf (DE); Gutsche, Nadine, 40723 Hilden (DE); Kohlstrung, Rainer, 68723 Plankstadt (DE); Franken, Uwe, 41542 Dormagen (DE)

(57) **Abstract**

The present invention relates to use a thermally debondable two-component polyurethane adhesive composition or cured product according to the present invention in a bonded structure, wherein the bonded structures are for example e-mobility related components.

## Description

### Technical field of the invention

The present invention relates to a thermally debondable two-component polyurethane adhesive composition, which is particularly suitable for use in e-mobility related components.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Water-based systems and UV activated acrylates have been used in the past as debonding adhesive layers. However, despite of the good debonding efficacy, the adhesion strength at room temperature, the poor adhesion on substrates like PP, PET or e-coated steel, and the poor compatibility with polyurethane thermal conductive adhesive were found dissatisfactory.

Therefore, there remains a need in the art to provide means to effectively debond bonded substrates, especially bonded structures in batteries of electronic vehicles and consumer electronics, while maintaining optimum adhesion and mechanical properties of the adhesive.

### Summary of the invention

The present invention relates to a thermally debondable two-component polyurethane adhesive composition comprising a first part comprising two or more polymeric polyols having an average hydroxyl functionality from at least 1.8; and thermally expandable thermoplastic microspheres; and a second part comprising at least one isocyanate-terminated compound; wherein the first part and the second part are mixed in an equivalent ratio of from 1:0.7 to 1:1.1.

The present invention also relates to a cured thermally debondable two-part polyurethane composition according to the present invention.

The present invention encompasses use of thermally debondable two-part polyurethane composition or cured product according to the present invention in a bonded structure.

The present invention also encompasses a bonded structure comprising: a first substrate; a second substrate; a thermally debondable two-part polyurethane composition layer or cured product layer according to the present invention; and an adhesive layer, wherein the thermally debondable two-part polyurethane composition is disposed on a surface of the first substrate and/or on a surface of the second substrate and wherein the adhesive layer is placed on top of the thermally debondable two-part polyurethane composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

Further, the present invention relates to a method of debonding said bonded structure according to the present invention, the method comprising the steps of: i) applying a heat; and, ii) debonding the surfaces, wherein the temperature applied in step i) is preferably from 60 to 200°C, and it is preferably applied preferably for a duration of from 15 seconds second to 60 minutes.

### Short description of the figures

Figure 1 illustrates the bonded structure and debonding method.
Figure 2 illustrates tensile lap shear strength results of LOCTITE TLB9150ABS in combination with examples 1-6 on Al3003 substrates.
Figure 3 illustrates tensile lap shear strength results thermally conductive epoxy adhesive (from Henkel) in combination with composition according to the present invention layer on AI3003 substrate.
Figure 4 illustrates tensile lap shear strength as function of temperature of LOCTITE TLB9150ABS in combination with composition according to the present invention on AI3003 substrate.
Figure 5 illustrates tensile lap shear strength results of LOCTITE TLB9150ABS in combination with composition according to the present invention layer on e-coated steel.
Figures 6 and 7 illustrate tensile lap shear strength results of LOCTITE TLB9150ABS in combination with composition according to the present invention layer on Al3003/PET-Al3003 and PP.
Figure 8 illustrates a test setup of a preliminary debonding test using an empty battery case and monitoring the temperature during debonding.
Figure 9 illustrates development of temperature curve of the battery cell during thermal debonding using a thermally conductive adhesive (LOCTITE TLB9150ABS) and composition according to the present invention layer.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term "*one component (1K) composition*" refers to a composition where, during storage of the composition, the composition components are all admixed together but the properties of the composition, including viscosity, remain consistent enough over the time of storage to permit successful utility of the composition at a later time.

"*Two-component (2K) compositions*" are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, "*ambient conditions*" means the temperature and pressure of the surroundings in which the composition is located or in which a coating layer or the substrate of said coating layer is located.

As used herein the term "*debondable*" means that, after curing of the adhesive, the bond strength can be weakened by at least 50% upon application of temperature of from 60 to 200 °C for a duration of from 15 seconds to 60 minutes. Bond strength is measured by Tensile Lap Shear (TLS) test performed at room temperature and based upon EN 1465:2009 (German version) Based on Adhesives - Determination of tensile lap-shear strength of bonded assemblies.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done using standard liquids of known viscosity from 1 to 50,000 cps (parallel plate PP20 and at shear rate 1 s⁻¹ at 23°C). Measurements of the compositions according to the present invention are done using the parallel plate PP20 at different shear rates from 1.5 to 100 s⁻¹.

As used herein the terms "polymer" and "polymeric" means prepolymers, oligomers, and both homopolymers and copolymers.

As used herein the term "prepolymer" means a polymer precursor capable of further reactions or polymerization by one or more reactive groups to form a higher molecular mass or cross-linked state. As used herein the prefix "poly" refers to two or more.

A polyol is understood to be a compound containing more than one hydroxyl (-OH) group in the molecule. A polyol can further have other functionalities on the molecule. The term "polyol" encompasses a single polyol or a mixture of two or more polyols.

The average hydroxyl (-OH) functionality refers to the average number of reactive hydroxyl groups contained in one molecule of polyol.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a thermally debondable two-component polyurethane adhesive composition comprising a first part comprising two or more polymeric polyols having an average hydroxyl functionality from at least 1.8; and thermally expandable thermoplastic microspheres; and a second part comprising at least one isocyanate-terminated compound; wherein the first part and the second part are mixed in an equivalent ratio of from 1:0.7 to 1:1.1.

The Applicant has found out that the composition according to the present invention has an optimised activation temperature for battery applications, while not adversely affecting the battery performance. The composition according to the present invention has good adhesion on various substrates such as metals, e-coated metal, PET and pretreated PP, and good adhesion to other adhesives such as thermally conductive polyurethane adhesives. Further, the composition according to the present invention has significant reduction on bond strength after the heat activation, and therefore, debond easily and debonded parts are easy to clean. Finally, the composition according to the present invention also provides a thermal isolation effect, and therefore, may protect the substrate to be debonded against heat during debonding.

The first part and the second part are mixed in an equivalent ratio of from 1:0.7 to 1:1.1, preferably the first part and the second part are mixed in an equivalent ratio of from 1:1.1.

These ratios are preferred because higher ratios may lead to NCO groups to act as a plasticiser and soften the matrix, whereas too low ratios may lead to too soft matrix and decreased bond strength.

The first part of the thermally debondable two-component polyurethane adhesive composition comprises two or more polymeric polyols having an average hydroxyl functionality from at least 1.8, preferably from 1.8 to 6.0, more preferably from 1.8 to 4.0.

The polymeric polyol may have a weight average molecular weight of from 400 to 10000 g/mol. "Molecular weight" herein refers to weight average molecular weight unless otherwise specified. The number average molecular weight Mn, as well as the weight average molecular weight Mw, is determined according to the present invention by gel permeation chromatography (GPC, also known as SEC) at 23°C using a styrene standard according to DIN EN ISO 16014-5:2012-10.

The polymeric polyol may also have a hydroxyl value from 10 to 500 mg KOH/g, preferably from 20 to 400 mg KOH/g, and more preferably from 50 to 350 mg KOH/g, measured according to DIN EN ISO 4629.

Some suitable polymeric polyols include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyether polyols are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polymeric polyols include diol EO/PO (ethylene oxide/propylene oxide) block copolymers, EO-tipped polypropylene glycols, or alkoxylated bisphenol A.

Some suitable polymeric polyols include polyether polyols modified by vinyl polymers. These polyols can be obtained, for example, by polymerizing styrene or acrylonitrile or mixtures thereof in the presence of polyether polyol.

Commercial examples of polyether polyol include Arcol series polyols such as Arcol PPG 425, Arcol PPG 2025 from Covestro, Dianol series polyols such as Dianol 330 from Arkema and Pluracol series polyols such as P-2010 from BASF.

Some suitable polymeric polyols include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polymeric polyols include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxy caproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polymeric polyols include C36 dimer diols and derivatives thereof. Some suitable polymeric polyols include castor oil and derivatives thereof. Some suitable polymeric polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes (polybutadiene polyol, such as Krasol LBH 2000 from Cray Valley). Some suitable polymeric polyols include polyisobutylene polyols. Some suitable polymeric polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polymeric polyols include polycarbonate polyols. Polycarbonate polyols may be obtained, for example, by reacting diols, such as propylene glycol, butane-1,4-diol or hexane-1,6-diol, diethylene glycol, triethylene glycol or tetraethylene glycol or mixtures of two or more thereof, with diaryl carbonates, for example diphenyl carbonate, or phosgene. Some suitable polymeric polyols include polyamide polyols.

Some suitable polymeric polyols include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

Some suitable polymeric polyols include cardanol based polyols. Cardanol is a derivative of cashew nutshell liquid, which is extracted from the layer between the nut and shell of the cashew nut. This interlayer contains predominantly anacardic acid (2-carboxy-3-pentadecadienylphenol) and related acids having different double-bond contents, and also cardol (m-pentadecadienylresorcinol). The liquid is extracted from the interlayer by heating, in the course of which the acids are decarboxylated.

The products thus obtained comprise cardanol, cardol and related compounds having different numbers of double bonds. Cardanol is finally isolated from CNSL by distillation. The side chains, which are saturated or cis-unsaturated, may undergo further reaction, by polymerization, to form higher molecular mass compounds.

Preferably, the cardanol based polyol is selected from cardanol based polyether polyols, cardanol based polyester polyols, cardanol based Mannich polyols, and combination thereof. Suitable cardanol based polyols include, but are not limited to, Polycard polyols available from Chemical Technical Services Inc. (e.g., Polycard XFN-50, Polycar XFN-53, and Polycard 425M), Cardolite Corp. (e.g., GX-9201, GX 9203, NX-9001, NX-9001LV, NX-9004, NX-9007, NX-9008, NX-5285, GX-9005, GX-9006, GX-9007, GX-9101, GX-9102, GX-9103, GX-9104), and BioBased Technologies (such as Agrol Platinum).

Prefreably, the polymeric polyol is selected from the group consisting of polyether polyol, polyester polyol, polybutadiene polyol and mixtures thereof, preferably the polymeric polyol is a mixture of trifunctional polypropylene ether polyol and castor oil.

These polymeric polyols are preferred because of their short chains which may help to increase the adhesion strength and provide required stiffness to the matrix.

Two or more polymeric polyols may be present in an amount from 15% to 75% by weight of the total weight of the first part of the composition, preferably from 28% to 65%, and even more preferably from 35 to 58%.

These quantities are preferred and considered ideal for the overall functionality of the composition, too high quantities may lead too low quantity of thermally expandable thermoplastic microspheres, and therefore, negatively effect on the debonding properties and stability of the composition, whereas too low quantities may have a negative effect on application of the composition.

The first part of the thermally debondable two-component polyurethane adhesive composition may comprise at least one mono-functional alcohol. The mono-functional alcohol acts as a rheological additive for the polymeric polyol which, when added at the desired application temperature, produces a significantly lower viscosity of the polyol component and a significantly better flow rate of the overall mixture of the thermally conductive adhesive composition.

In a highly preferred embodiment, the first part of the thermally debondable two-component polyurethane adhesive composition comprises at least one mono-functional alcohol.

The mono-functional alcohol may be a mono-functional alkyl alcohol, preferably having 1 to 20 carbon atoms, preferably having 4 to 18 carbon atoms, more preferably having 6 to 18 carbon atoms, and even more preferably having 8 to 18 carbon atoms.

The mono-functional alcohol is selected from group consisting of methanol, ethanol, propanol, isopropanol, butanol, 2-butanol, isobutanol, pentanol, hexanol, heptanol, octanols, nonanol, 1-decanol, undecanol, dodecanol, tridecanol, tetradecanol, pentadecanol, hexadecanol, heptadecanol, octadecanol, nonadecanol, eicosanol, and mixtures thereof, preferably mono-functional alcohol is 1-decanol.

In a highly preferred embodiment, the mono-functional alcohol is 1-decanol.

1-decanol is preferred mono-functional alcohol because it influences the softening point of the adhesive composition and creates thermoplastic polyurethane behaviour and further positively effects on debonding properties.

Suitable commercially available mono-functional alcohol for use in the present invention include but is not limited to 1-decanol from Thermo Scientific.

The monofunctional alcohol may be present in an amount from 0.5 to 20% by weight of the total weight of the first part of the composition, preferably from 0.5 to 15% and more preferably from 0.6 to 10%.

These quantities are preferred as they provide ideal performance for the composition according to the present invention. Too low quantities, below 0.5% may not provide desired technical effect, whereas too high quantities may not improve desired technical effect without negatively impacting to the other properties.

The first part of the thermally debondable two-component polyurethane adhesive composition according to the present invention comprises thermally expandable thermoplastic microspheres.

Suitable thermally expandable thermoplastic microspheres have a core-shell structure, and wherein the shell is formed from cross-linked polymer and the core is composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1 ,2-propylene glycol diacrylate, 1 ,2-propylene glycol dimethacrylate, 1 ,4-butanediol diacrylate, 1 ,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate. A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each. Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, in particular tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. Said blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least 4 carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a particle size from 5 to 100 µm, preferably from 8 to 75 µm, preferably from 9 to 50 µm, more preferably from 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when they are exposed to a heat, preferably when exposed to a heat of from 60 to 200°C, preferably from 80 to 160 °C, more preferably from 80 to 120°C.

The heat source may be for example a thermal source, a sonication probe or an electromagnetic source.

The thermally expandable thermoplastic microspheres may be present in the thermally debondable two-component polyurethane adhesive composition according to the present invention in a quantity of from 15 to 50% by weight based on the total weight of the first part of the composition, preferably from 20 to 40%, and more preferably from 27 to 37%.

The above defined and preferred ranges are ideal to break the bond line while maintaining low solid content in the composition. Too low quantities, less than 15%, may not lead to a complete bond break, whereas too high quantities, more than 50%, may increase the solid content too high without providing any additional technical benefit.

The first part of the thermally debondable two-component polyurethane adhesive composition according to the present invention may optionally comprise an adhesion promoter. An adhesion promoter may be added to the composition to improve the adhesion of the polyurethane resin to a substrate. Adhesion promoters may function by forming a new layer at the interface which binds strongly to both the substrate and the coating. The resultant interfacial region may also be more resistant to chemical attack from the environment.

The selection of adhesion promoter may be determined by the type of surface to which the composition will be applied. That said, the most common commercial adhesion promoters are organosilanes, such as epoxy functional organosilanes. Suitable organosilanes for use in the present invention is but not limited to glycidoypropyltrimethoxy silane. Further types of adhesion promoter which may find utility herein include: organometallic compounds such as titanates and zirconates, of which specific examples include isopropyl tri(N-ethylaminoethylamino)titanate, tetraisopropyl di(dioctylphosphito)titanate, neoalkoxytrisneodecanoyl zirconate and zirconium propionate; dihydric phenolic compounds such as catechol and thiodiphenol; hydroxyl amines such as tris(hydroxymethyl) aminomethane; polyhydric phenols such as pyrogallol, gallic acid, or tannic acid; and, plastisols, which are suspensions of polyvinyl chloride particles in a plasticizer.

Suitable commercially available adhesion promoter for use in the present invention include but is not limited to Dynasylan GLYMO from Evonik.

The adhesion promoter may be present in the thermally debondable two-component polyurethane adhesive composition according to the present invention in a quantity of from 0.1 to 10% by weight based on the total weight of the first part of the composition, preferably from 1 to 9% and more preferably from 2.5 to 8%.

The above defined and preferred adhesion promoter quantity ranges are ideal to provide adequate boost to an adhesion strength without adversely affecting to other properties.

The thermally debondable two-component polyurethane adhesive composition according to the present invention is characterized by the presence of fillers in both parts thereof. The composition of the filler in each part is independently determined and, as such, may be the same or different for each part.

Broadly, there is no particular intention to limit the shape of the particles employed particles that are acicular, spherical, ellipsoidal, cylindrical, bead-like, cubic or platelet-like may be used alone or in combination. Moreover, it is envisaged that agglomerates of more than one particle type may be used.

Preferably, the filler is selected from the group consisting of calcium carbonate, calcium oxide, calcium hydroxide (lime powder), precipitated and/or pyrogenic silicic acid, zeolites, bentonites, wollastonite, magnesium carbonate, diatomite, barium sulphate, alumina, clay, talc, sand, quartz, flint, mica, glass beads, glass powder, paramagnetic nanoparticles, alumina based thermally conductive fillers, and other ground mineral substances. Short fibres such as glass fibres, glass filament, polyacrylonitrile, carbon fibres, or polyethylene fibres can also be added.

The pyrogenic and/or precipitated silicic acids advantageously have a BET surface area from 10 to 90 m²/g. When they are used, they do not cause any additional increase in the viscosity of the composition according to the present invention but do contribute to strengthening the cured composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also, suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less, more preferably from 100 to 200 µm.

Non-conductive fillers which impart thixotropy to the composition may be preferred for many applications: such fillers are also described as rheological adjuvants, e.g. hydrogenated castor oil, fatty acid amides, or swellable plastics such as PVC.

In a highly preferred embodiment, the filler is the same in the first part and the second part and is a mixture of calcium carbonate and zeolite powder.

Suitable commercially available fillers for use in the present invention include but is not limited to Omya BH from Omya, UOP-L powder from Azelis and WINNOFIL SPM and Extra M 100 from Imerys.

The filler may be present in an amount of from 2 to 20% by weight of the total weight of the first part of the composition, preferably from 5 to 15%, more preferably from 6 to 13%.

The filler may be present in an amount of from 20 to 50% by weight of the total weight of the second part of the composition, preferably from 25 to 40%, more preferably from 27 to 33%.

The second part of the thermally debondable two-component polyurethane adhesive composition according to the present invention comprises a isocyanate-terminated compound.

The isocyanate-terminated compound can be any compound having on average two, three or more isocyanate groups. As incorporated herein the term "isocyanate-terminated compound" encompasses diisocyanate, polymeric isocyanates, and isocyanate-terminated oligomers and polymers. It can be used both individually and mixtures, such isocyanate-terminated compounds. In one embodiment, the isocyanate-terminated compound is selected from the group consisting of an aromatic polyisocyanate, an alicyclic polyisocyanate, an aliphatic polyisocyanate, and mixture thereof, and preferably is one or more aliphatic polyisocyanates. The isocyanate-terminated compound preferably has an NCO content of 20 to 30%. The viscosity of the isocyanate-terminated compound is preferably no more than 5000 mPa.s.

Some advantageous isocyanate-terminated compounds have the general structure O=C=N-X-N=C=O where X is an aliphatic, alicyclic or aryl radical, preferably an aliphatic or alicyclic radical containing 4 to 18 carbon atoms.

Some suitable isocyanates include 1,5-naphthylene diisocyanate, diphenyl methane diisocyanate (MDI) including the 2,2'- 2,4'- and 4,4'- isomers, polymeric MDI (pMDI), hydrogenated MDI (HMDI), xylylene diisocyanate (XDI), tetramethyl xylylene diisocyanate (TMXDI), di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates, phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether4,4'-diphenyl diisocyanate. Aromatic polyisocyanates are preferred and diphenyl methane diisocyanate (MDI) and its isomers and polymeric MDI (pMDI) are more preferred as part or all of the polyisocyanates used for synthesis of the pre-polymers.

Some suitable isocyanates include isocyanate functional pre-polymers. Such pre-polymers are formed by reacting excess amount of polyisocyanate with a polyol, a polyamine, polythiol, or the combination of them. "Excess" is understood to mean that there are more equivalents of isocyanate functionality from the polyisocyanate compound than equivalents of hydroxyl functionality from the polyol present during reaction to form the pre-polymer. In this disclosure, it is to be understood that the terms polyisocyanate pre-polymer or pre-polymer or isocyanate functional pre-polymer are applied to any compound made according to the forgoing description, i.e., as long as the compound is made with at least a stoichiometric excess of isocyanate groups to isocyanate reactive groups it will be referred to herein as polyisocyanate pre-polymer or a pre-polymer or isocyanate functional pre-polymer.

Sulfur-containing polyisocyanates are obtained, for example, by reaction of 2 mole hexamethylene diisocyanate with 1 mole thiodiglycol or dihydroxydihexyl sulfide. Other suitable diisocyanates are, for example, trimethyl hexamethylene diisocyanate, 1,4-diisocyanatobutane, 1,12-diisocyanatododecane and dimer fatty acid diisocyanate. Suitable diisocyanates are the tetramethylene diisocyanate, hexamethylene diisocyanate, undecane diisocyanate, dodecamethylene diisocyanate, 2,2,4-trimethylhexane-2,3,3-trimethylhexamethylene diisocyanate, 1,3-cyclohexane diisocyanate, 1,4-cyclohexane diisocyanate, 1,3- and 1,4-tetramethyl xylene diisocyanate, isophorone, 4,4-dicyclohexylmethane, tetramethylxylylene (TMXDI) and lysine ester diisocyanate.

Aliphatic polyisocyanates with two or more isocyanate functionality formed by biuret linkage, uretdione linkage, allophanate linkage, and/or by trimerization are suitable.

Suitable at least trifunctional isocyanates are polyisocyanates formed by trimerization or oligomerization of diisocyanates or by reaction of diisocyanates with polyfunctional compounds containing hydroxyl or amino groups. Isocyanates suitable for the production of trimers are the diisocyanates mentioned above, the trimerization products of HDI, MDI, TDI or IPDI being preferred.

Blocked, reversibly capped polyisocyanates, such as 1,3,5-tris-[6-(1-methylpropylideneaminoxycarbonylamino)-hexyl]-2,4,6-trix-ohexahydro-1,3,5-triazine, are also suitable. The polymeric isocyanates formed, for example, as residue in the distillation of diisocyanates are also suitable for use. The isocyanate-terminated compound encompasses a single compound or the mixture of two or more compounds.

The isocyanate-terminated compound is preferably selected from the group consisting of aromatic diisocyanates, aliphatic diisocyanates, alicyclic diisocyanates, aromatic polyisocyanates, alicyclic polyisocyanates, aliphatic polyisocyanates, and mixtures thereof, preferably the at least one isocyanate-terminated compound is methylene diphenyl disocyanate.

In a highly preferred embodiment, the isocyanate-terminated compound is methylene diphenyl disocyanate.

Methylene diphenyl disocyanate is preferred due its ideal reaction rate.

Suitable commercially available isocyanate-terminated compound for use in the present invention include but are not limited to Desmodur VK10, Desmodur VK5 and Desmodur VK20 from Covestro.

The isocyanate-terminated compound may present from 35 to 70% by weight based on the total weight of the second part of the composition, preferably from 40 to 65%, more preferably from 45 to 60%, and even more preferably from 48 to 58%.

The above quantities are preferred, because too high quantities, more than 70% may lead unstable aging composition, whereas too low quantities, mainly less than 35% may lead to too viscous composition which may be difficult to dispense.

The ratio of the isocyanate groups contained in the isocyanate-terminated compounds relative to the OH groups contained in the polyols is as a rule in the range of equivalence and it is expedient if a slight excess of isocyanate groups in relation to the humidity is present at the surface. According to the invention, the NCO/OH ratio is between 0.90:1 and 1.5:1, in particular between 1.0:1 and 1.3:1. According to the invention, the polyol component and the isocyanate component may be mixed in a weight ratio from 1:10 to 10:1, preferably from 1:5 to 5:1, and more preferably from 1:2 to 2:1 depending on the choices of polyols and isocyanate-terminated compounds.

The second part of the thermally debondable two-component polyurethane adhesive composition according to the present invention may further comprise a plasticiser. The plasticiser improves flexibility of the composition according to the present invention.

The plasticizer is preferably selected from the group consisting of ethers of monofunctional, linear or branched C4-C16 alcohols; esters of abietic acid, butyric acid, thiobutyric acid, and propionic acid esters; esters based on nitrocellulose and polyvinyl acetate; dicarboxylic acid esters; glycolic acid esters; benzoic acid esters; phosphoric acid esters; sulfonic acid esters; trimellitic acid esters; endcapped polyethylene, polypropylene glycols, bifunctional polyether polyol, and mixtures thereof, preferably the plasticiser is alkyl sulphonic acid ester of phenol.

Suitable commercially available plasticiser for use in the present invention include but are not limited to Lupranol 1000/1 from BASF, Caradol ED 56-300 from Shell, Arcol PPG 2000 from Covestro, Voranol 2000 L from DOW, Jeffol PPG 2000 from Huntsman and Mesamoll from LANXESS.

The thermally debondable two-component polyurethane adhesive composition according to the present invention, wherein the plasticiser may be present in an amount from 5 to 25% by weight of the total weight of the second part of the composition, preferably from 10 to 20% and more preferably from 13 to 19%.

These quantities are preferred because too low quantities, less than 5%, may not have a technical effect, whereas too high quantities, more than 25%, may lead to decreased adhesion properties and initial strength of the bonded structure.

The present invention relates to a cured thermally debondable two-part polyurethane composition according to the present invention.

The composition according to the present can be cured in about 10 to 360 minutes at a temperature within the range of about 40°C to about 90°C. When cured, the cured product exhibits a good adhesion.

The present invention relates to use of thermally debondable two-part polyurethane composition or cured product according to the present invention in a bonded structure.

The present invention relates to a bonded structure comprising: a first substrate; a second substrate; a thermally debondable two-part polyurethane composition layer or cured product layer according to the present invention; and an adhesive layer, wherein the thermally debondable two-part polyurethane composition is disposed on a surface of the first substrate and/or on a surface of the second substrate and wherein the adhesive layer is placed on top of the thermally debondable two-part polyurethane composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

The first and second substrates can be same or different and not limited to any particular substrate material. However, suitable substrate should have a temperature stability below debonding temperature and melting point above 100°C.

Suitable substrates for use in the present invention are, but not limited to aluminium, aluminium alloys, e-coated steel, and PET coated aluminium.

The adhesive layer of the bonded structure according to the present invention may be formed from any kind of adhesive suitable to adhere selected substrates. Suitable adhesive may be one component (1k) composition or a two component (2k) composition. Suitable adhesive may be selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

Suitable commercially available adhesive for use in the present invention include but are not limited to Teroson EP 5065, LOCTITE TLB9150APS and Teroson MS 939 from Henkel AG & Co. KGaA.

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, and various structural adhesive applications and various thermally conductive applications.

The present invention relates to a method of debonding said bonded structure according to the present invention, the method comprising the steps of: i) applying a heat; and, ii) debonding the surfaces, wherein the temperature applied in step i) is preferably from 60 to 200°C, and it is preferably applied preferably for a duration of from 15 seconds second to 60 minutes.

The heat source may be a thermal source, a sonication probe or an electromagnetic source.

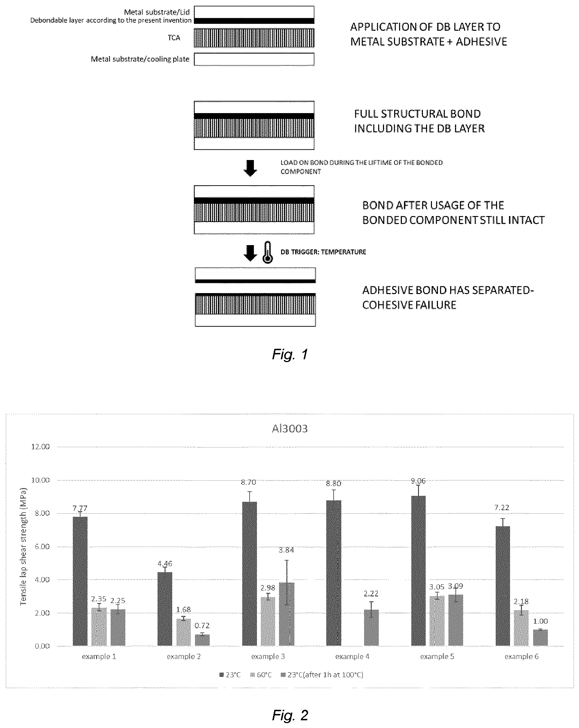

Figure 1 illustrates the bonded structure using combination of the thermally debondable two-part polyurethane composition according to the present invention and thermally conductive adhesive and debonding method.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.
Tensile shear strength is measured according to DIN EN 1465:2009-07.
Tensile lap shear strength is measured according to DIN EN 1465:2009-07.
Thermally conductive polyurethane adhesive (PU TCA) LOCTITE TLB9150APS from Henkel
Thermally conductive epoxy adhesive (from Henkel, having a thermal conductivity of 2W/mK and high lap shear strength (e.g. 9.8MPa on AI3003 = structural adhesive). It is curable at room temperature and has a high elongation of 10%)
Polyurethane two component adhesive (Loctite UK 2073 from Henkel)
Expancel 031DU40 (Nouryon, LKJBHK6556)
Rubber spacer (d= 1.6 mm)
Bonderite M-NT 1455 W Wipes (from Henkel).

### Substrates:

E-coated steel (Rocholl E-COATED STEEL Stahlprüfkörper #50725) having the following dimensions 100 mm x 25 mm x 1.8mm
Aluminum 3003 (AI3003, Rocholl Aluminiumprüfkörper #77467) having the following dimensions 100 mm x 25 mm x 2.0mm
Aluminum 3003 manually wrapped in PET adhesive foil (AI3003/PET) having the following dimensions 100 mm x 25 mm x 2.2mm
Poly propylene specimens PP (InnoTech, PRÜF10106PP) having the following dimensions 100 mm x 25 mm x 3.0mm.

The substrates were pretreated as follows:
The substrates were rubbed with a piece of paper soaked with iPrOH and let dry.

For AI3003 an additional wiping step using Bonderite M-NT 1455 W Wipes was carried out to create a good adhesive base for debondable layer coating.

The PP substrates were first rubbed with a piece of paper soaked in iPrOH, and later the substrates were flamed using a flaming machine with a speed of 48 m/min and a flame distance of 6 cm.

The AI3003 wrapped in PET were first rubbed with a piece of paper soaked in iPrOH, and later plasma pretreated using atmospheric plasma at distance of 16mm.

Thermally debondable two-component polyurethane adhesive composition according to the present invention and comparative examples were prepared in accordance with Tables 1 and 2 herein below.

Parts A and B were mixed according to the desired part A:B ratio in a speed mixer cup for 15 seconds at 1500 rpm.

**Table 1**

| First part of the composition | | | | | | |
|---|---|---|---|---|---|---|
| | Example 1 | Example 2 | Example 3 | Example 4 | Example 5 | Example 6 |
| Material | wt% | wt% | wt% | wt% | wt% | wt% |
| Trifunctional polypropylene ether polyol from Covestro | 14.76 | 15.51 | 14.48 | 14.16 | 13.63 | 12.54 |
| Caster Oil from Confco | 36.38 | 38.22 | 35.69 | 34.90 | 33.59 | 30.93 |
| 1-Decanol from Rhermo Scientific | | | 1.01 | 2.31 | 4.44 | 8.78 |
| Calcium Carbonate from Omya BH | 4.32 | 4.54 | 4.24 | 4.15 | 3.99 | 3.68 |
| 3-glycidyloxypropyltrimethoxy silane from Evonik | 6.06 | 6.37 | 5.95 | 5.82 | 5.60 | 5.16 |
| Zeolite powder from Grace | 7.22 | 7.58 | 7.08 | 6.92 | 6.66 | 6.14 |
| Expandible microsphere from Nouryon | 31.25 | 27.78 | 31.54 | 31.75 | 32.00 | 32.77 |

**Table 2**

| Second part of the composition | |
|---|---|
| Material | wt% |
| Methylene diphenyl diisocyanate from Covestro | 53.10 |
| Zeolite powder from Grace | 21.24 |
| Alkyl sulphonic acid ester of phenol from Lanxess | 16.81 |
| Calcium carbonate from Imerys | 8.85 |

### Substrate preparation for Lap Shear measurements

After pretreatment of the substrates as described above, the substrates were assembled using the following procedure.

Half of the substrates were bar-coated with compositions according to the present invention (examples 1-6) depending on the final thickness that wanted to be achieved. The coated substrates were cured using an oven at 60 °C for 2 hours. Once the samples were cured, the coating thickness resulted to be between 100 - 200 µm depending on the experiment.

Before applying the adhesive, rubber spacers of 1.6mm were applied on the top of the layer of examples 1-6 with 10 mm between each spacer. This is necessary to provide an even thickness bondline.

The adhesive (LOCTITE TLB9150APS or Loctite UK 2073) was applied in between the rubber spacer with a total bondline area of 2.5 cm x 1 cm using a manual cartridge pusher through a static mixer.

A second substrate (not coated and cleaned), was mounted and faced with the first substrate containing the adhesive. After removal of the excess adhesive, it was clamped to ensure a good adhesion of the adhesive on the top of the surface.

Once the procedure was repeated for all the substrates. The substrates were cured in the oven at 60°C for 3 days (Loctite UK 2073) and at 60°C for 2 days (LOCTITE TLB9150APS).

Tensile Lap Shear Strength of LOCTITE TLB9150ABS in combination with thermally debondable two-component polyurethane adhesive composition according to the present invention on AI3003
The Lap Shear Strength of LOCTITE TLB9150ABS in combination with different thermally debondable two-component polyurethane adhesive composition according to the present invention layers (examples 1-6) having an average thickness of 180 µm was measured before and after debonding (at 100°C for 1h). The results are illustrated in figure 2.

The effect of crosslink density on the lap shear strength before and after debonding was investigated (examples 1 and 2). Example 1 layer and example 2 layer differ from each other only on the NCO/OH ratio, respectively 1.1 and 0.7. The NCO/OH ratio (also expressed as crosslinking density) strongly affects the lap shear tensile strength a 23°C (around 3.3MPa less for the sample with less crosslinking density), but also the debonding efficiency (around 13% less for the sample with higher crosslinking density) as it can be seen from figure 1.

The different results can be explained by considering the strength of the debondable adhesive layer. The sample with higher strength (example 1 layer) does not allow the expandible microsphere to fully expand resulting in a lower debonding efficacy. To improve the debonding efficacy, a monofunctional alcohol was added to the formulation to have a full crosslink density, however with pendant polymer chains that can help to increase the flexibility of the debonding layer. The example 6 displays the most favourable results keeping the lap shear strength at 23°C of around 7MPa however, a debonding efficacy was around 86%.

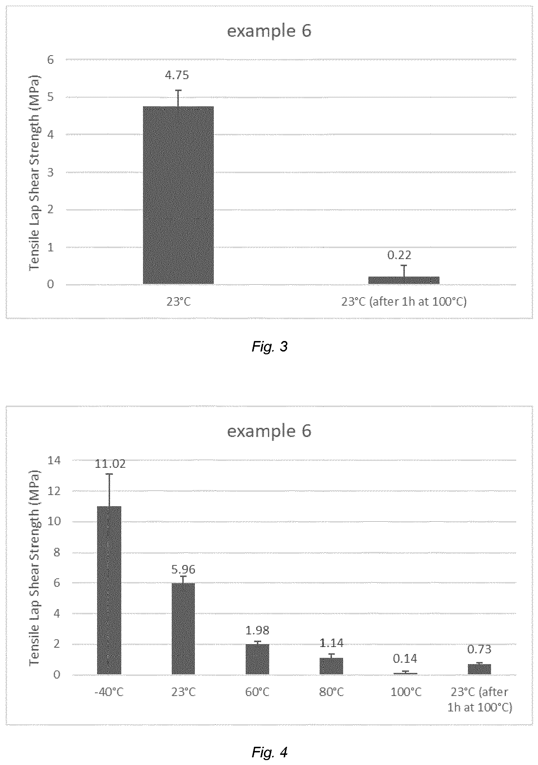

In addition, thermally conductive epoxy adhesive (from Henkel) in combination with example 6 (thickness of 212 ± 50 µm) on AI3003 substrate was tested. Tensile lap shear strength results are illustrated in figure 3 and it can be seen that the composition according to the present invention worked also with a thermally conductive epoxy adhesive and maintained high debonding efficacy around 95%.

Tensile Shear Strength of LOCTITE TLB9150ABS in combination with example 6 layer on AI3003 as function of temperature.

The Lap Shear Strength of LOCTITE TLB9150ABS in combination with example 6 layer (thickness of 212 ± 50 µm) on AI3003 was measured in the temperature range of -40°C/100°C. The test results are illustrated in figure 4. It can be seen in figure 4 that the debonding layer thickness affect on the strength at 23°C. In addition, tensile shear strength dropped to 1.14 MPa above 80°C, probably due to the weak strength of the adhesive and debonding layer above those temperatures.

However, above 100°C it was recorded a decreasing of strength of 99% explained by the bondline breaking due to the expandible microsphere contained in the debonding layer.

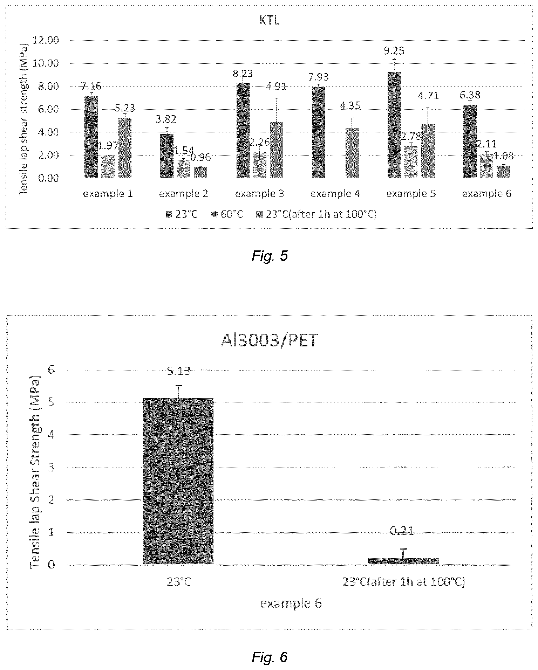

Tensile Lap Shear Strength of LOCTITE TLB9150ABS in combination with composition according to the present invention layer on E-COATED STEEL
The Lap Shear Strength of the LOCTITE TLB9150ABS in combination with examples 1-6 layer was measured to evaluate the efficacy on E-COATED STEEL. The results are illustrated in figure 5. As can be seen, the results are very close to those obtained by using AI3003, confirming that composition according to the present invention work very good on different metal substrates.

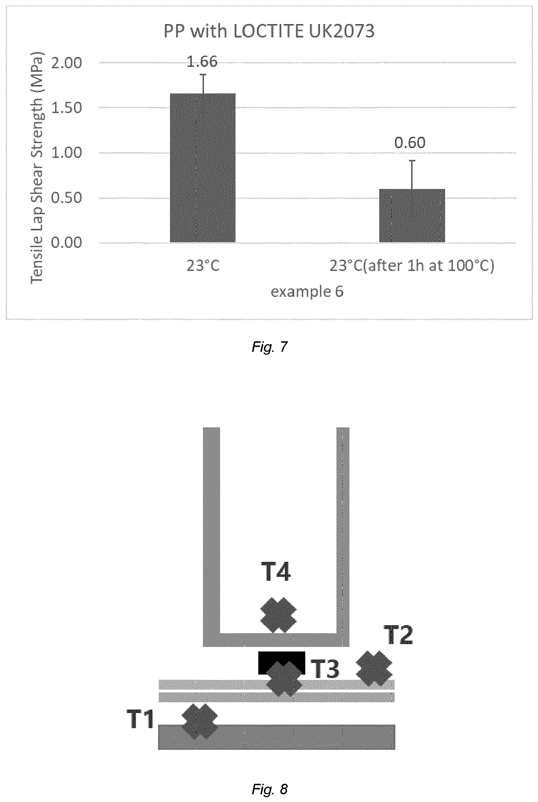

Tensile Lap Shear Strength of LOCTITE TLB9150ABS in combination with example 6 layer on AI3003/PET-AI3003 and PP
Lap shear strength of LOCTITE TLB9150ABS in combination with example 6 layer was measured to evaluate the efficacy on AI3003/PET wrapped combination of LOCTITE UK 2073/2173 example 6 layer on PP substrates. Composition of example 6 was bar coated onto a substrate. The results are illustrated in figures 6 and 7.

Composition of example 6 showed very good adhesion on PET, indeed the failure before debonding was recorded between the PET and the AI3003. After debonding the substrates at 100°C for 1 h, the failure was recorded in the debonding layer, with a debonding efficacy of almost 96%. Composition of example 6 showed very good adhesion on PP, indeed the failure before debonding was recorded between the PP and the AI3003. After debonding the substrates at 100°C for 1 h, the failure was recorded in the debonding layer, with a debonding efficacy of around 64%.

### Evaluation of the temperature propagation in a battery cell during debonding

For safety reasons it is important that a car battery does not pass 65°C to avoid dangerous electrolyte spilt. For this reason, it is important that during the debonding of a battery cell, the temperature of the battery cell does not pass the 65°C. For this reason, it was carried out a preliminary debonding test using an empty battery case and monitoring the temperature during the debonding.

The setup used is illustrated in Figure 8. T1 is the temperature of the heating element, T2 is the temperature of example 6 layer, T3 is the temperature of the adhesive layer and T4 is the temperature of the battery cell. In the bottom marked with T1 is represented the heating element used to heat the thermally debondable two-part polyurethane composition layer and the cell. After, there is an aluminium plate of 1 mm thickness needed to apply formula 1 layer (the one that is marked with T2). On top of formula 1 layer there is LOCTITE TLB9150ABS (marked with T3), having 1.6 mm thickness. On top of everything there is the empty battery cell of Aluminium having 0.5 mm thickness.

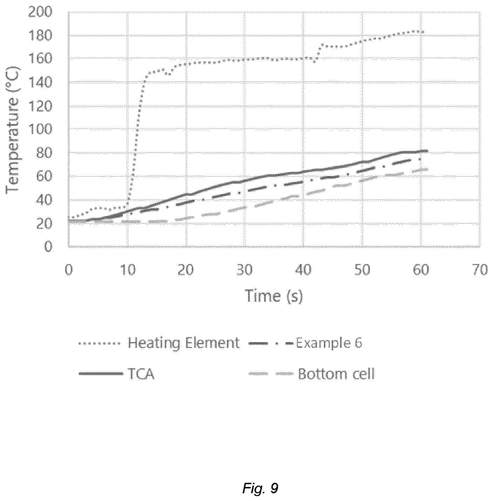

Figure 9 illustrates development of temperature curve of the battery cell during thermal debonding using a thermally conductive adhesive (LOCTITE TLB9150ABS) and example 6 layer. It is clearly visible that once the example 6 layer expanded due to the expansion of the expandible microsphere fillers temperature of the battery cell case stayed below 65°C, and in addition, easy debonding of the battery case was carried out.

## Claims

1. A thermally debondable two-component polyurethane adhesive composition comprising
a first part comprising
two or more polymeric polyols having an average hydroxyl functionality from at least 1.8; and
thermally expandable thermoplastic microspheres;
and
a second part comprising
at least one isocyanate-terminated compound;
wherein the first part and the second part are mixed in an equivalent ratio of from 1:0.7 to 1:1.1.

2. The thermally debondable two-component polyurethane adhesive composition according to claim 1, wherein the first part and the second part are mixed in an equivalent ratio of 1:1.1.

3. The thermally debondable two-component polyurethane adhesive composition according to claim 1 or 2, wherein the polymeric polyol is selected from the group consisting of polyether polyol, polyester polyol, polybutadiene polyol and mixtures thereof, preferably the polymeric polyol is a mixture of trifunctional polypropylene ether polyol and castor oil.

4. The thermally debondable two-component polyurethane adhesive composition according to claim 1 or 3, wherein the two or more polymeric polyols are present in an amount from 15% to 75% by weight of the total weight of the first part of the composition, preferably from 28% to 65%, and even more preferably from 35 to 58%.

5. The thermally debondable two-component polyurethane adhesive composition according to any of claims 1 to 4, wherein the first part of the composition further comprises at least one mono-functional alcohol, wherein the at least one mono-functional alcohol is preferably selected from group consisting of methanol, ethanol, propanol, isopropanol, butanol, 2-butanol, isobutanol, pentanol, hexanol, heptanol, octanols, nonanol, 1-decanol, undecanol, dodecanol, tridecanol, tetradecanol, pentadecanol, hexadecanol, heptadecanol, octadecanol, nonadecanol, eicosanol, and mixtures thereof, preferably mono-functional alcohol is 1-decanol.

6. The thermally debondable two-component polyurethane adhesive composition according to claim 5, wherein the at least one monofunctional alcohol is present in an amount from 0.5 to 20% by weight of the total weight of the first part of the composition, preferably from 0.5 to 15% and more preferably from 0.6 to 10%.

7. The thermally debondable two-component polyurethane adhesive composition according to any of claims 1 to 6, wherein the thermally expandable thermoplastic microspheres have a core-shell structure, and wherein the shell is formed from cross-linked polymer and the core is composed of a blowing agent.

8. The thermally debondable two-component polyurethane adhesive composition according to any of claims 1 to 7, wherein the thermally expandable thermoplastic microspheres expand when exposed to a heat, preferably exposed to a heat of from 60 to 200°C, preferably from 80 to 160 °C, more preferably from 80 to 120°C.

9. The thermally debondable two-component polyurethane adhesive composition according to any of claims 1 to 8, wherein the thermally expandable thermoplastic microspheres have a particle size from 5 to 100 µm, preferably from 8 to 75 µm, preferably from 9 to 50 µm, more preferably from, 10 to 30 µm, more preferably from 12 to 20 µm, and even more preferably from 13 to 19 µm, wherein the particle size is measure by laser diffraction (Low Angle Laser Light Scattering LALLS).

10. The thermally debondable two-component polyurethane adhesive composition according to any of claims 1 to 9, wherein the thermally expandable thermoplastic microspheres are present from 15 to 50% by weight based on the total weight of the first part of the composition, preferably from 20 to 40% and more preferably from 27 to 37%.

11. The thermally debondable two-component polyurethane adhesive composition according to any of claims 1 to 10, wherein the at least one isocyanate-terminated compound is selected from the group consisting of aromatic diisocyanates, aliphatic diisocyanates, alicyclic diisocyanates, aromatic polyisocyanates, alicyclic polyisocyanates, aliphatic polyisocyanates, and mixtures thereof, preferably the at least one isocyanate-terminated compound is methylene diphenyl disocyanate.

12. The thermally debondable two-component polyurethane adhesive composition according to any of claims 1 to 11, wherein the at least one isocyanate-terminated compound is present from 35 to 70% by weight based on the total weight of the second part of the composition, preferably from 40 to 65%, more preferably from 45 to 60%, and even more preferably from 48 to 58%.

13. Cured thermally debondable two-part polyurethane composition according to any of claims 1 to 12.

14. Use of thermally debondable two-part polyurethane composition according to any of claims 1 to 12 or cured product according to claim 13 in a bonded structure.

15. A bonded structure comprising:
a first substrate;
a second substrate;
a thermally debondable two-part polyurethane composition layer according to any one of claims 1 to 12 or cured product layer according to claim 13; and
an adhesive layer,
wherein the thermally debondable two-part polyurethane composition is disposed on a surface of the first substrate and/or on a surface of the second substrate and wherein the adhesive layer is placed on top of the thermally debondable two-part polyurethane composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

16. A method of debonding said bonded structure according to claim 15, the method comprising the steps of:
i) applying a heat; and,
ii) debonding the surfaces,
wherein the temperature applied in step i) is preferably from 60 to 200°C, and it is preferably applied preferably for a duration of from 15 seconds second to 60 minutes.
